# EUROPEAN PATENT APPLICATION

(11) **EP 4 155 588 A1**
(43) Date of publication of application: **29.03.2023**
(21) Application number: 21199286.2
(22) Date of filing: 28.09.2021
(51) Int. Cl.: F16K 3/24, F16K 11/044, F16K 11/07, F16K 3/26, F16K 39/02

(54) **VALVE ASSEMBLY**

(71) Applicant: ESBE AB, 333 75 Reftele (SE)
(72) Inventor: BENGTSSON, Dan, 333 93 Skeppshult (SE)
(74) Representative: AWA Sweden AB

(57) **Abstract**

A valve assembly (1000) is provided. The valve assembly (1000) comprises a valve housing (100) comprising a first liquid opening (20), a second liquid opening (40), a third liquid opening (60), a valve bore (80) having a cylindrical geometry having an axial extension (A1), the valve bore (80) merging with the first liquid opening (20) at a first merge (82), the second liquid opening (40) at a second merge (84), and the third liquid opening (60) at a third merge (86). The valve assembly (1000) further comprises a plunger (200) having a cylindrical geometry, the plunger (200) being disposed within the valve bore (80), and being movable parallel to the axial extension (A1) of the valve bore (80) between a first plunger position and a second plunger position, wherein the first merge (82) is closed for a liquid to flow between the valve bore (80) and the first liquid opening (20) while the plunger (200) is situated in the first plunger position, and wherein the second merge (84) is closed for a liquid to flow between the valve bore (80) and the second liquid opening (40) while the plunger is situated in the second plunger position. The valve assembly (1000) is characterized in that an interior valve bore wall section (10a,10b) of the valve bore has, on a radially opposing side of a specific merge of the first (82) and the second merge (84), a surface geometry complementary to an outer surface geometry of the plunger, thereby radially securing the plunger in the valve bore.

## Description

### TECHNICAL FIELD

The present disclosure relates to valve assemblies for mixing or diverting a liquid in a heating or cooling system.

### BACKGROUND

Valve assemblies installed in heating or cooling systems may be used for diverting or mixing a liquid. Such valve assemblies are subject to liquid flow characteristics that may depend on the type of heating or cooling system, structural features of the valve assembly, etc. A common problem with mixing valves is an uneven outgoing liquid flow, in that the outgoing volumetric velocity depends on the relative proportion of the liquid flowing into the valve assembly through a plurality of liquid inlets. Hence, there is a need for an improved valve assembly that retains a desirable flow characteristic and, at the same time, minimize vibrations/noise, etc.

### SUMMARY

It is an object to mitigate, alleviate or eliminate one or more of the above-identified deficiencies in the art and disadvantages singly or in any combination and at least partly solve the above-mentioned problem.

According to a first aspect, there is provided a valve assembly comprising
a valve housing comprising
   a first liquid opening,
   a second liquid opening,
   a third liquid opening,
   a valve bore having a cylindrical geometry having an axial extension, the valve bore merging with
      the first liquid opening at a first merge,
      the second liquid opening at a second merge, and
      the third liquid opening at a third merge,
a plunger having a cylindrical geometry, the plunger being disposed within the valve bore, and being movable parallel to the axial extension of the valve bore between a first plunger position and a second plunger position, wherein the first merge is closed for a liquid to flow between the valve bore and the first liquid opening while the plunger is situated in the first plunger position, and wherein the second merge is closed for a liquid to flow between the valve bore and the second liquid opening while the plunger is situated in the second plunger position,
characterized in that
an interior valve bore wall section of the valve bore has, on a radially opposing side of a specific merge of the first and the second merge, a surface geometry complementary to an outer surface geometry of the plunger, thereby radially securing the plunger in the valve bore.

The wording "plunger" may equivalently refer to a "valve piston", a "cone", an axially movable "valve member", etc.

A first surface geometry being "complementary" to a second surface geometry henceforth refers to the first surface geometry and the second surface geometry being essentially equivalent. In connection with the claimed scope, this equivalence between the interior valve bore wall section and the outer surface geometry of the plunger facilitates the plunger being radially well stabilized in the valve bore. Hence, the radius of the cylindrical valve bore 80 is essentially similar to the radius of the plunger 200. The plunger may thereby be radially stable in the valve bore 80. That is, any radial movement of the plunger in the valve bore may thereby be minimized, facilitating reduction of noise and vibrations. This may further increase the lifetime of the valve assembly, preventing downtime, or the like. Further, liquid flow characteristics may be improved.

The structure of the valve assembly may allow the valve assembly functioning as a mixing valve or a diverting valve. Should use of the valve assembly be mixing of incoming liquids, such as, e.g., a hot and a cold liquid, the first and the second liquid openings may serve as liquid inlets, whereas the third liquid opening may serve as a liquid outlet. This type of function may occasionally be referred to as "mixing mode". Conversely, for the function of a diverting valve, the third liquid opening may serve as a liquid inlet, whereas the remaining liquid openings may serve as liquid outlets. This type of function may occasionally be referred to as "diverting mode". Regarding the structural features, the plunger is configured to move along the axial extension of the valve bore, wherein an outer surface of the plunger is directly or indirectly in contact with the interior valve bore wall. Hence, any need of additional plunger guiding means, such as a hollow elongated insertion plug situated in the valve bore in which the plunger may move, may be redundant, facilitating a smaller valve bore with remained function. This may further facilitate a valve assembly having fewer parts, thereby being cheaper and easier to assemble and maintain.

The wording "parallel" is throughout this disclosure to be interpreted including a tolerance. By way of example, two lines may be parallel if an angle between the lines is below 5 degrees, or the like. Hence, the tolerance may be 5 degrees, and more preferably below 10 degrees.

The valve bore may comprise a first recess merging with the first merge.

The recess facilitates a controllable and specific liquid flow characteristic. This will be further described below.

The valve bore may comprise a first recess merging with the first merge, and a second recess merging with the second merge.

This may further facilitate an even liquid flow, which may be desirable when the valve assembly is used in mixing mode.

A recess portion of a specific recess in connection with a corresponding specific merge may have a cylindrical geometry having
an axial extension parallel to the axial extension of the valve bore, and
a radial center shifted towards the specific merge.

This may further facilitate a controllable and specific liquid flow characteristic. Further, this may further facilitate a turbulence of an incoming liquid to thereby provide an improved blending of incoming liquids when the valve assembly is installed as a mixing valve. Hence, a specific plunger position may, given a specific temperature and/or pressure associated with respective liquid opening of the first and the second liquid opening, provide reliable characteristics of an outgoing liquid being closer to the corresponding predicted characteristics, such as a temperature being close to a predicted temperature, etc.

An axially extending length of the plunger may be similar to an axially extending length of the interior valve bore wall section on the radially opposing side of the respective merge of the first and the second merge.

This may extend a contact surface between an outer surface of the plunger and the interior valve bore wall section, which thereby further may secure the plunger in the valve bore, hence preventing possibly occurring radial play and/or vibrations, etc.

A top axial end portion of the plunger may comprise a first O ring, and a bottom axial end portion of the plunger may comprise a second O ring, wherein the first O ring is arranged to be in contact with a top valve bore surface of the valve bore when the plunger is situated in the first plunger position, the top valve bore surface having a surface normal being parallel to the axial extension of the valve bore, and wherein the second O ring is arranged to be in contact with a bottom valve bore surface of the valve bore when the plunger is situated in the second plunger position, the bottom valve bore surface having a surface normal being parallel to the axial extension of the valve bore.

This may facilitate an improved sealing of liquid such that an accurate and more well-defined liquid flow is provided, thereby reducing unnecessary leakage of liquid in the interior of the valve assembly.

The valve housing may comprise an intermediate O ring located between the top valve bore surface and the bottom valve bore surface, wherein a geometrical plane spanned by the intermediate O ring separates the first and the second merge.

This facilitates a simple and efficient sealing between the plunger and the valve bore, such that liquid is prevented to pass between the outer surface of the plunger and the interior wall of the valve bore. This may further prevent vibrations and/or noise.

The plunger may comprise a cylindrical mantle having axially opposing openings allowing liquid to exclusively flow through the plunger via the axially opposing openings.

This may further facilitate a controllable and specific liquid flow characteristic. Further, this geometrical property may provide a relatively compact valve housing.

The valve assembly may further comprise
an electronically controlled linear actuator,
a translator having an elongated geometry, wherein the translator is situated parallel to the axial extension of the valve bore, and wherein the translator is operably connected to the electronically controlled linear actuator and the plunger, such that a movement of the translator along the axial extension thereby generates a movement of the plunger along the axial extension.

This may facilitate, e.g., automatic temperature and/or flow control of an outgoing liquid when the valve assembly is installed in a heating or cooling system.

The first liquid opening may constitute a first liquid outlet, the second liquid opening may constitute a second liquid outlet, and the third liquid opening may constitute a liquid inlet, the valve assembly thereby functioning as a diverting valve for diverting a liquid flowing into an interior of the valve through the liquid inlet whereafter liquid flows out from the valve bore through the first liquid outlet and/or the second liquid outlet. Alternatively, the first liquid opening may constitute a first liquid inlet, the second liquid opening may constitute a second liquid inlet, and the third liquid opening may constitute a liquid outlet, the valve assembly thereby functioning as a mixing valve for mixing a liquid flowing into an interior of the valve through the first and the second liquid inlet whereafter the liquid flows out from the interior of the valve through the liquid outlet.

This facilitates flexibility of the valve assembly and may reduce manufacturing costs, etc.

The first liquid opening and the second liquid opening may be located on radially opposite sides of the valve housing.

The valve housing may be manufactured by a durable material being any one of steel, brass, iron, composite, or any compound thereof.

A durable material may extend the lifetime of the valve assembly. Should the material be a compound of elements, relative proportions may be varied to achieve desirable mechanical characteristics.

According to a second aspect, the invention refers to the use of the valve assembly according to the first aspect for diverting or mixing a liquid flowing in a heating or cooling system.

The above-mentioned features in connection with the first aspect, when applicable, apply to this second aspect as well. In order to avoid undue repetition, reference is therefore made to the above.

A further scope of applicability of the present invention will become apparent from the detailed description given below. However, it should be understood that the detailed description and specific examples, while indicating preferred embodiments of the invention, are given by way of illustration only, since various changes and modifications within the scope of the invention will become apparent to those skilled in the art from this detailed description.

Hence, it is to be understood that this invention is not limited to the particular component parts of the device described or acts of the methods described as such device and method may vary. It is also to be understood that the terminology used herein is for purpose of describing particular embodiments only and is not intended to be limiting. It must be noted that, as used in the specification and the appended claim, the articles "a," "an," "the," and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings does not exclude other elements or steps.

### BRIEF DESCRIPTION OF THE DRAWINGS

The above and other aspects of the present invention will now be described in more detail, with reference to appended figures. The figures should not be considered limiting; instead they are used for explaining and understanding. Like reference numerals refer to like elements throughout.
Fig. 1A shows a cross-sectional profile of a valve assembly.
Fig. 1B shows a side view of the valve assembly.
Figs 2A-2D show, by various cross-sectional profiles of the valve assembly, a recess in connection to a liquid opening of the valve assembly.
Figs 3A-3C show a plunger being figuratively isolated from the valve assembly.
Fig. 4 shows an exterior structure of the valve assembly and an electrically controllable linear actuator mounted on the valve assembly.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

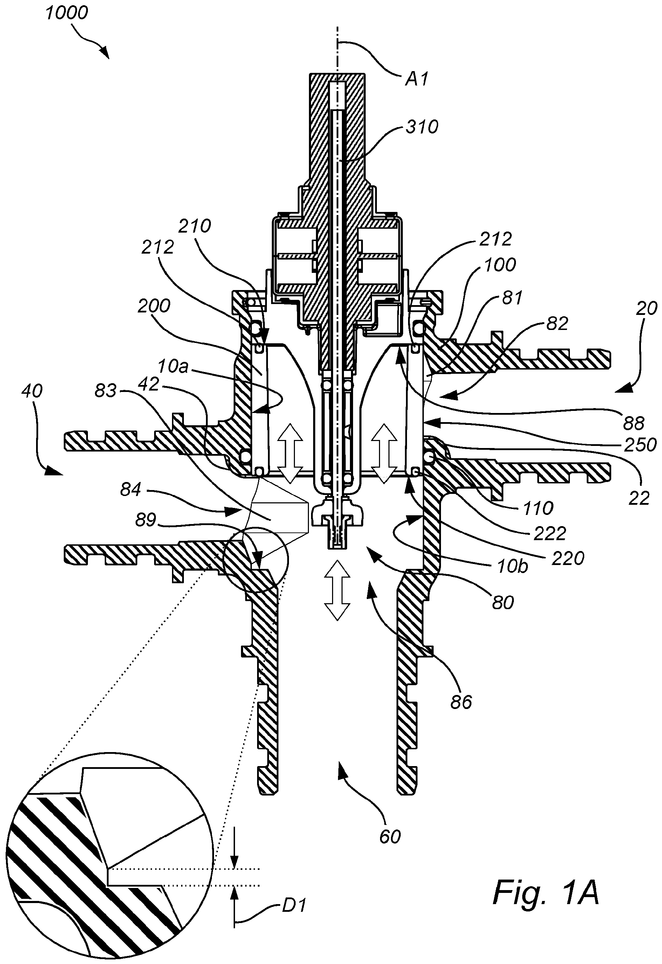

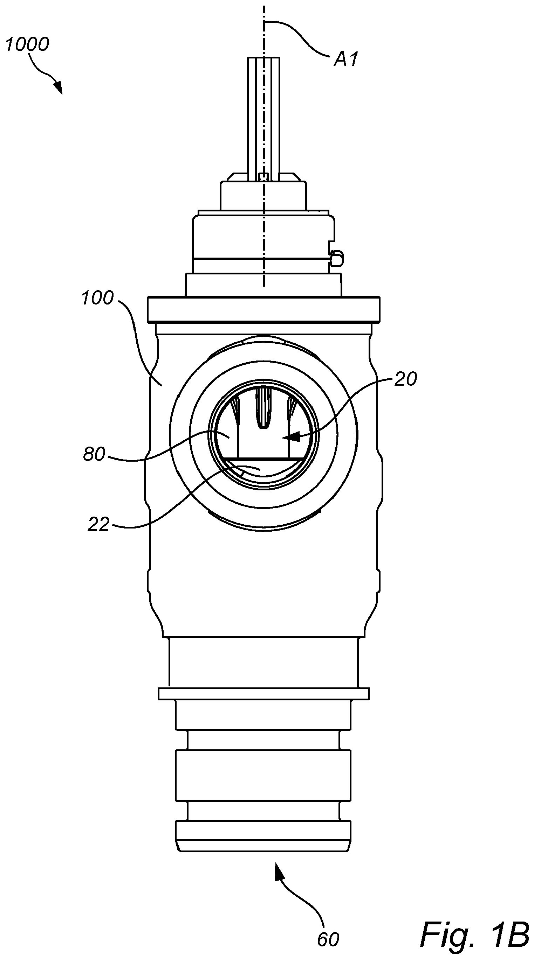

In connection with Fig. 1 there is shown a cross-sectional profile of a valve assembly 1000. The valve assembly 1000 comprises a valve housing 100. The valve housing 100 comprises a first liquid opening 20, a second liquid opening 40, and a third liquid opening 60. The valve assembly 1000 according to this embodiment may thereby be viewed as a so-called three-way valve. However, four, or even five liquid openings may be possible within the claimed scope. The valve housing 100 further comprises a valve bore 80. The valve bore 80 has a cylindrical geometry having an axial extension A1. Preferably, the valve bore 80 has a circular cylindrical geometry. The valve bore 80 merges with the first liquid opening 20 at a first merge 82. The first merge 82 is thereby an opening between the valve bore 80 and the first liquid opening 20, allowing a liquid to flow between the valve bore 80 and the first liquid opening 20. Further, the valve bore 80 merges with the second opening 40 at a second merge 84. The second merge 84 is thereby an opening between the valve bore 80 and the second liquid opening 40, allowing a liquid to flow between the valve bore 80 and the second liquid opening 40. Further, the valve bore 80 merges with the third liquid opening 60 at a third merge 86. The third merge 82 is thereby an opening between the valve bore 80 and the third liquid opening 60, allowing a liquid to flow between the valve bore 80 and the third liquid opening 60.

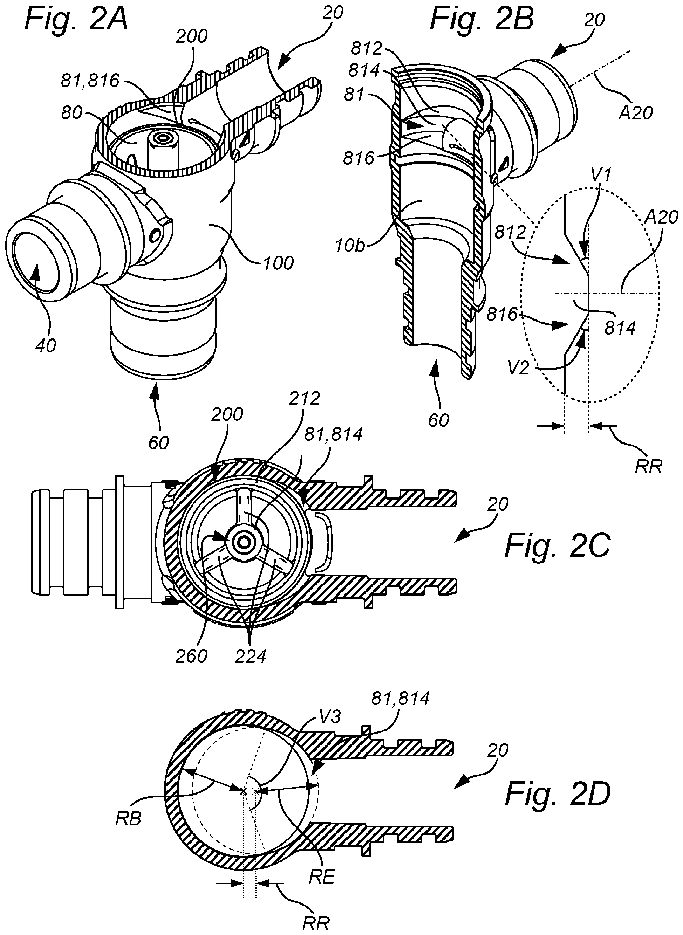

The valve assembly 1000 further comprises a plunger 200. The plunger 200 has a cylindrical geometry. Preferably, the plunger 200 has a circularly cylindrical geometry, facilitating manufacturing of the valve assembly 1000. The plunger 200 is disposed within the valve bore 80. The plunger 200 is movable parallel to the axial extension A1 of the valve bore 80. The plunger 200 is movable between a first plunger position and a second plunger position. When the plunger position is positioned in the first plunger position the first merge 82 is closed for a liquid to flow between the valve bore 80 and the first liquid opening 20. When the valve assembly 1000 is oriented as shown in Fig. 1, the first plunger position is a top end position of the plunger 200. The plunger position shown in Fig. 1 is thereby the first plunger position. It is appreciated that the valve assembly 1000 may be oriented differently when installed in a heating or cooling system. Hence, any orientations, such as top, bottom, etc., in a non-limiting way refers to the orientation of the valve assembly as shown in Fig. 1. Conversely, the second merge 84 is closed for a liquid to flow between the valve bore 80 and the second liquid opening while the plunger 200 is situated in the second plunger position. The second plunger position is an axially opposite position relative to the first plunger position. The second plunger position may occasionally be denoted a bottom end position below. The plunger 200 is thereby constrained to move along the axial extension A1 of the valve bore 80 and prevented to move in a geometrical plane transverse to the axial extension A1, e.g., a radial extension of the valve bore 80. The plunger 200 may be located in any position between the first plunger position and the second plunger position. Hence, a specific position of the plunger 200 may result in a specific blending of incoming liquids flowing into the valve bore 80 through the first 20 and the second 40 liquid openings, provided the valve assembly 1000 being installed as a mixing valve. The liquid openings 20,40,60 may have a circularly cylindrical geometry. The first liquid opening 20 may comprise a first ledge 22 which reduces a cross-sectional area in a geometrical plane perpendicular to an axial extension A20 (see Fig. 2B) of the first liquid opening. The first ledge 22 may have rounded edges to smoothen out a liquid flow flowing into the valve bore 80 from the first liquid opening. The ledge 22 is shown in Fig. 1B, where the valve assembly is seen in the direction of the axial extension A20 towards the first liquid opening. The first ledge 22 may be located on a bottom side of the first liquid opening 20, as can be seen in Figs 1A and 1B. The second liquid opening 40 may comprise a second ledge 42 being similar to the first ledge 22. The second ledge 42 may be located on a top side of the second liquid opening 40. The positions of the first 22 and the second 42 ledge may reduce the distance between the first 20 and the second 40 liquid openings along the axial extension A1 of the valve bore 80.

An interior valve bore wall section 10a,10b of the valve bore has, on a radially opposing side of a specific merge of the first 82 and the second 84 merge, a surface geometry complementary to an outer surface geometry of the plunger 200. One such interior valve bore wall section 10b is shown in Fig. 2B. Accordingly, there are three alternatives for the interior valve bore wall sections 10a,10b. The first alternative is that on a radially opposing side of the first merge 82 the interior valve bore wall section 10a has a surface geometry complementary to the outer surface geometry of the plunger 200. The second alternative is that on a radially opposing side of the second merge 84 the interior valve bore wall section 10b has a surface geometry complementary to the outer surface geometry of the plunger 200. The third alternative is that both the first 82 and the second 84 merge has a surface geometry complementary to the outer surface geometry of the plunger 200 as the valve bore surface geometry on respective radially opposing side of the first 82 and the second 84 merge. The skilled person appreciates that reference to a complementary geometry means a complementary geometry of a portion of the plunger 200 relative to the interior valve bore wall section of that portion of the plunger 200. This is however always the case for all surface portions of the plunger 200 when the plunger 200 and the valve bore 80 have a circularly cylindrical geometry.

The valve bore 80 may comprise a first recess 81 merging with the first merge 82. This is best viewed in Fig. 2. The recess 81 may have any adequate geometry. However, a specific geometry of the recess may provide a specific liquid flow characteristic. This may be relevant at least when the valve assembly is installed and used as a mixing valve. This will be further described below. The recess 81 thereby extends a geometrical interface surface between the first liquid opening 20 and the valve bore 80 such that the interface surface of the geometrical surface defined by the cylindrical valve bore 80 is larger compared to an absence of the first recess 81.

The valve bore 80 may comprise the first recess 81 merging with the first merge 82 (as per the above), and a second recess 83 merging with the second merge 84. Hence, the valve bore 80 may have a recess in connection with both the first 82 and the second 84 merge. This may further facilitate a liquid flow characteristic at least when the valve assembly 1000 is used as a mixing valve to thereby facilitate a controlled liquid flow of a liquid leaving the valve bore through the third liquid opening 60.

A recess portion 814 of a specific recess 81,83 in connection with a corresponding specific merge 82,84 may have a cylindrical geometry having an axial extension parallel to the axial extension A1 of the valve bore 80, and a radial center shifted towards the specific merge 82,84. This may apply for a single merge of the first 82 and the second merge 84. This may apply for both the first 82 and the second merge 84. This example recess geometry is best viewed in Fig. 2. In Fig. 2B, the first recess 81 and the recess portion 814 connected thereto are shown. The recess portion 814 may merge with a first 812 and a second 816 chamfered portion of the recess 81. The recess may be a milled-out recess of the valve housing 100. An edge of the first chamfered portion 812 may form an angle V1 against the axial extension A1 of the valve bore 80 being in the range of 10-80 degrees. Typically, the angle V1 lies in the range 15-25 degrees, but this number may vary depending on the application of the valve assembly 1000, e.g., depending on a specific liquid flow characteristic, or the like. This geometrical property is further pronounced in the dashed elliptical inset in connection to Fig. 2B. Herein an axial extension A20 refers to an axial extension of the first liquid opening 20. The angle V1 may further vary over the circumferential extension of the recess 81, wherein the circumferential extension refers to an angular extension of the valve bore with respect to the axial extension A1. The surface of the recess 81 is depicted (see elliptical inset) by straight lines with respect to the axial extension A1. However, one or more of these lines may be non-linear. For example, the edge of the first chamfered portion 812 may be curved by means of a Bezier curve, a parabola, or the like. The same may apply to the second chamfered portion 816. The skilled person appreciates the existence of many variations in this respect falling within the claimed scope. A radial recess portion extension RR of the recess portion 814 may be 1-20% of a radius RB of the cylindrical valve bore 80. Preferably, the radial recess portion extension RR may lie in the range of 5-15% of the radius RB of the cylindrical valve bore 100. A radius RE of the recess portion 814 may be similar to the radius RB of the cylindrical valve bore 100. Hence, the recess portion 814 may, in a geometrical plane perpendicular to the axial extension A1 of the valve bore 100, be viewed as an eccentric circle relative to a cross section of the valve bore 100 in the same geometrical plane. In such a situation, the radial recess portion extension RR is similar to a radial shift of the eccentric circle and the cross section of the valve bore 100. Above, the first recess 81 has been discussed. However, as mentioned above, the same description may apply for the second recess 83.

An axially extending length of the plunger 200 may be similar to an axially extending length of the interior valve bore wall section 10a,10b on the radially opposing side of the respective merge of the first 82 and the second merge 84. Hence, when the plunger 200 is situated in the first plunger position, the plunger 200 leaves the second merge 84 fully open for a liquid to flow between the second valve opening 40 and the valve bore 80. Conversely, when the plunger 200 is situated in the second plunger position, the plunger 200 leaves the first merge 82 fully open for a liquid to flow between the first valve opening and the valve bore 80.

A top axial end portion 210 of the plunger 200 may comprise a first O ring 212; see, Fig. 1A or Fig. 2C. The first O ring 212 may be situated in a circumferentially milled channel on the top axial end portion 210 of the plunger 200. The first O ring 212 thereby extends axially from the plunger such that the plunger 200 and a top valve bore surface 88 are in contact, via the first O ring 212, when the plunger 200 is situated in the first plunger position. The top valve bore surface 88 may have a surface normal being parallel to the axial extension A1. The bottom axial end portion 220 of the plunger 200 may comprise a second O ring 222. The second O ring 222 may be situated in a circumferentially milled channel on the bottom axial end portion 220 of the plunger 200. The second O ring 222 thereby extends axially from the plunger such that the plunger 200 and a bottom valve bore surface 89 are in contact, via the first O ring 212, when the plunger 200 is situated in the first plunger position. The bottom valve bore surface 88 may have a surface normal being parallel to the axial extension A1.

The O rings 212,222 may be manufactured by any adequate elastic material, such as rubber. Preferably, the rubber may be nitrile rubber, also known as nitrile butadiene rubber (NBR). Alternatively, the rubber may be ethylene propylene diene monomer rubber (EPDM), but other natural or synthetic rubbers such as natural rubber (NR), styrene rubber (SBR), chloroprene rubber (CR), butyl rubber (IIR), silicone rubber (Q) or a mixture thereof, such as a mixture of natural rubber and styrene rubber (NR/SBR) are also possible. This may further apply for other disclosed O rings in this text. Further, the skilled person appreciates that any O ring disclosed herein may be replaced by any adequate soft sealing element.

The valve housing 100 may comprise an intermediate O ring 110 situated between the top valve bore surface 88 and the bottom valve bore surface 89. A geometrical plane spanned by the intermediate O ring 110 may separate the first 20 and the second 40 merge. An outer sleeve of the plunger 200 may thereby always be in contact with the intermediate O ring 110 to prevent an undesirable liquid leak between the interior wall of the valve bore 80 and the outer sleeve of the plunger 200.

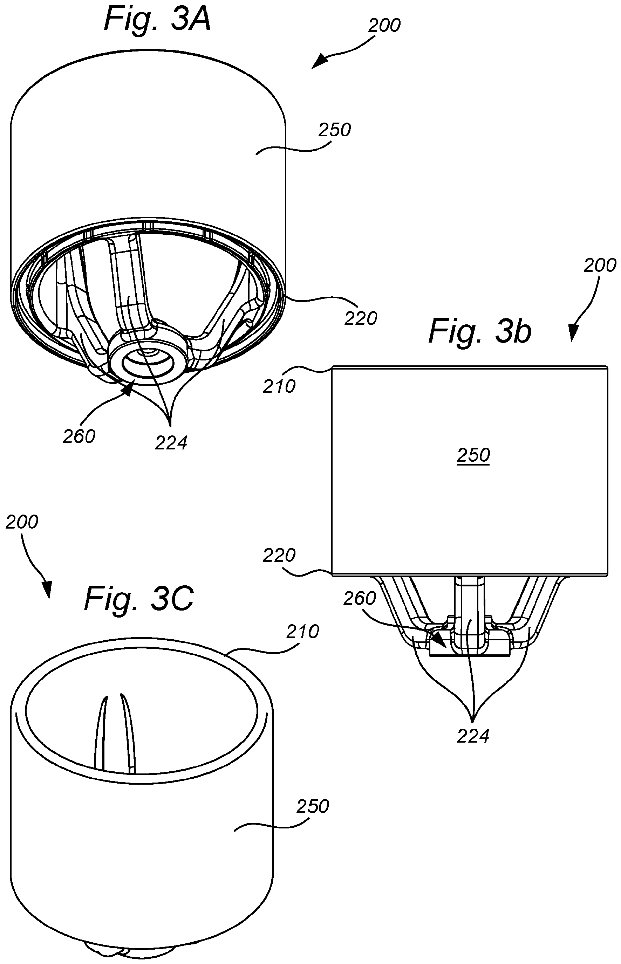

In connection with Fig. 3, the plunger 200 is shown in isolation, i.e., separated from the valve assembly 1000. Fig. 3A shows a perspective view from below, Fig. 3B shows a side view, and Fig. 3C shows a perspective view from above, of the plunger 200. The plunger 200 may comprise a cylindrical mantle 250 having axially opposing openings. The cylindrical mantle 250 may be a simply connected surface, i.e., the cylindrical mantle 250 lack any openings. The axially opposing openings allow a liquid to exclusively flow through the plunger 200 via the axially opposing openings. The bottom axial end portion 220 may comprise a plurality of spokes 224. Each spoke 224 of the plurality of spokes 224 is attached to the cylindrical mantle 250. The plurality of spokes 250 connect at a plunger hub 260. The plunger hub 260 may comprise attaching means for attaching a translator 310 configured to move the plunger 200 along the axial extension A1 of the valve bore 100. The translator can be seen in Fig. 1 and will be further discussed below. The plurality of spokes 224 extends radially relative to the cylindrical mantle 250. The plurality of spokes 224 may further extend axially relative to the cylindrical mantle 250. Hence, the plunger hub 260 may be located axially below the bottom axial end portion 220 of the cylindrical mantle 250. Each spoke of the plurality of spokes 224 may have any adequate cross-sectional profile. Preferably each spoke of the plurality of spokes 224 are similar with respect to each other. Preferably, the plurality of spokes 224 comprise at least three spokes, as can be seen in the examples of Fig. 2C and Fig. 3A. However, any adequate number of spokes is possible. A liquid flowing through the plunger 200 hence flow between the plurality of spokes 224 provided the liquid flows from below. As can be seen in Fig. 3C, the top axial end portion 210 of the plunger 200 is open for a liquid flow. However, in an alternative embodiment, also the top axial end portion 210 may comprise spokes.

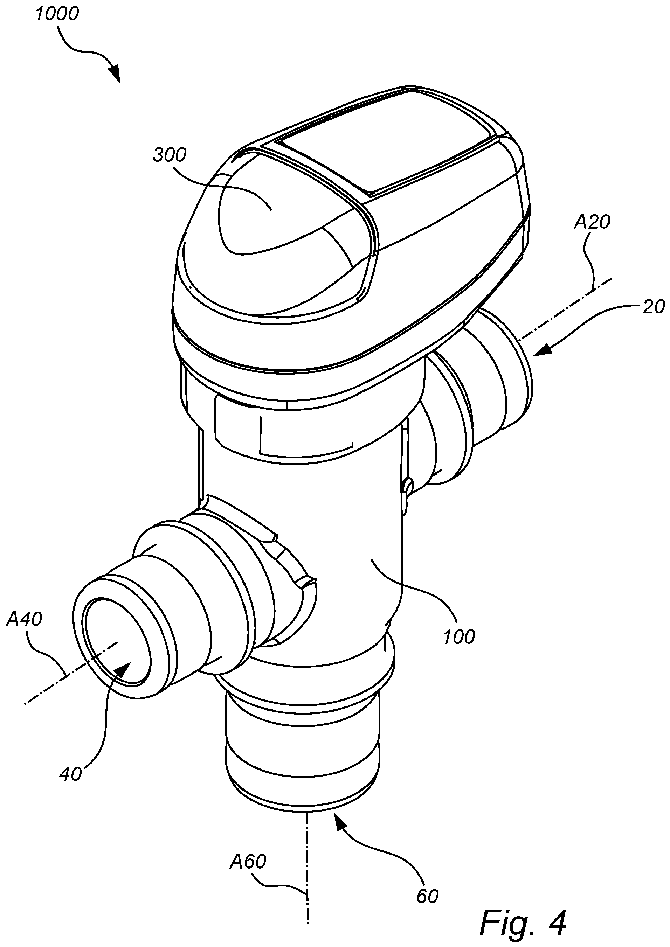

The valve assembly 1000 may further comprise an electronically controlled linear actuator 300. An example exterior structure of the valve assembly 1000 including the electronically controlled linear actuator 300 is shown in Fig. 4. The electronically controlled linear actuator 300 is arranged to convert an electrical current to a mechanical motion for axially moving the plunger 200 to regulate or control a liquid flowing through the valve housing. To this end, the valve assembly 1000 further comprises a translator 310 having an elongated geometry. The translator is shown in Fig. 1. The translator 310 is situated parallel to the axial extension A1 of the valve bore 80. The translator 310 is operably connected to the electronically controlled linear actuator 300 and the plunger 200. A movement of the translator 310 along the axial extension A1 thereby generates a movement of the plunger 200 along the axial extension A1. The translator 310 may be directly or indirectly connected to the electronically controlled linear actuator 300 and/or the plunger 200.

The valve assembly may be installed in a heating or cooling system to function as a diverting valve. Hence, the first liquid opening 20 may constitute a first liquid outlet and the second liquid opening 40 may constitute a second liquid outlet. The third liquid opening 60 may constitute a liquid inlet. The valve assembly 1000 may thereby function as a diverting valve for diverting a liquid flowing into an interior of the valve through the liquid inlet whereafter the liquid flows out from the valve bore 80 through the first liquid outlet or the second liquid outlet. Hence, while the plunger 200 is situated in the first plunger position (as seen in Fig. 1), liquid may flow from the liquid inlet 60 to and out from the second liquid outlet 40. This may apply even if the plunger 200 is moved a specific extent D1 towards the second plunger position. The specific extent D1 is emphasized in an inset in Fig. 1. The specific extent D1 may lie in the range of 0-10% and more preferably in the range of 1-4% of the maximum possible moving distance of the plunger 200 being an axially movable distance of the plunger 200 between the first and the second plunger position. A substantially similar specific extent (not shown) is applicable also in connection with the first liquid outlet 20. Hence, a diversion of a liquid may be possible even if the plunger 200 is not completely in any of its end positions within the valve bore 80. However, throughout this text, whenever the plunger 200 is situated within the specific extent D1, the plunger 200 is referred being situated in the second plunger position, and vice versa for the first plunger position.

In an alternative use case, the valve assembly 1000 may be installed in a heating or cooling system to function as a mixing valve. Hence, the first liquid opening 20 may constitute a first liquid inlet 20 and the second liquid opening 40 may constitute a second liquid inlet 40. The third liquid opening 60 may constitute a liquid outlet 60. The valve assembly may thereby function as a mixing valve for mixing liquid flowing into an interior of the valve through the first 20 and the second 40 liquid inlet whereafter the liquid flows out from the interior of the valve through the liquid outlet 60. Whereas the recess(es) 81, 83 may not be of particular importance when the valve assembly 1000 is installed to function as a diverting valve as per the above, the recess(es) 81,83 may facilitate a more controllable flow of a liquid leaving the valve bore 80 through the liquid 60 outlet when installed to function as a mixing valve. When the plunger 200 is situated between the first and the second plunger position mixing of inflowing liquid may be possible. The inflowing liquid may be hot water flowing from the first valve inlet to the valve bore 80 and cold water flowing from the second valve inlet to the valve bore 80. A mixed liquid is thereby a mixture of the hot water having a first specific temperature and the cold water having a second specific temperature, where a temperature of the mixed liquid, flowing out from the valve bore 80 through the liquid outlet 60, depends on the axial position of the plunger 200.

The first liquid opening 20 and the second liquid opening 40 may be located on radially opposite sides of the valve housing 100. Hence, the axial extension A20 of the first liquid opening 20 may be parallel to an axial extension A40 of the second liquid opening. However, as described above, provided the axial extensions A20, A40 are radially centered in respective liquid opening 20,40, the axial extensions A20, A40 may be axially shifted along the axial extension A1 of the valve bore 80. An axial extension A60 of the third liquid opening 60 may be parallel to the axial extension A1 of the valve bore.

Alternatively, the mutual orientations of the liquid openings 20,40,60 may be different from what has been disclosed above without departing from the claimed scope. By way of example, the first 20 and the second 40 liquid opening may be situated on the same side of the valve housing such that the openings points in a substantially similar direction, or angled 90 degrees relative to each other, etc., with substantially remained function. Further, the third valve opening 60 may be differently oriented than what has been disclosed above. For instance, the third valve opening 60 may be angled relative to the valve bore 100. That is, the axial extension A60 of third valve opening 60 may substantially differ from the axial extension A1 of the valve bore 100, where an angle between the axial extensions A60, A1 lies in the range 10-90 degrees, or the like.

The valve housing 100 may be manufactured by a durable material being any one of steel, brass, iron, composite, or any compound thereof. Preferably, the valve housing 100 is made of a metallic material, and more preferably this metallic material is the metallic compound brass. The same may apply for other parts of the valve assembly 1000, such as the plunger 200. However, the valve housing 1000 and the plunger 200 may be manufactured by different materials. The skilled person appreciates that a number of variations of materials may apply within the claimed scope.

Accordingly, and in summary, a valve assembly 1000 being, in operation, relatively vibration free and at the same time providing a desired liquid flow characteristic has been exemplified above in a non-limiting way. This is possible due to the snug fit between the plunger 200 and the valve bore 80 when the plunger 200 is situated in, or in proximity of the first or second plunger position, as well as the recesses 81, 83 in connection with merges 82,84 between the valve bore 80 and the first and the second liquid openings 20,40.

The person skilled in the art realizes that the present invention by no means is limited to the preferred embodiments described above. On the contrary, many modifications and variations are possible within the scope of the appended claims.

Additionally, variations to the disclosed embodiments can be understood and effected by the skilled person in practicing the claimed invention, from a study of the drawings, the disclosure, and the appended claims.

## Claims

1. A valve assembly (1000) comprising
a valve housing (100) comprising
a first liquid opening (20),
a second liquid opening (40),
a third liquid opening (60),
a valve bore (80) having a cylindrical geometry having an axial extension (A1), the valve bore (80) merging with
the first liquid opening (20) at a first merge (82),
the second liquid opening (40) at a second merge (84), and
the third liquid opening (60) at a third merge (86),
a plunger (200) having a cylindrical geometry, the plunger (200) being disposed within the valve bore (80), and being movable parallel to the axial extension (A1) of the valve bore (80) between a first plunger position and a second plunger position, wherein the first merge (82) is closed for a liquid to flow between the valve bore (80) and the first liquid opening (20) while the plunger (200) is situated in the first plunger position, and wherein the second merge (84) is closed for a liquid to flow between the valve bore (80) and the second liquid opening (40) while the plunger (200) is situated in the second plunger position,
**characterized in that**
an interior valve bore wall section (10a,10b) of the valve bore has, on a radially opposing side of a specific merge of the first (82) and the second merge (84), a surface geometry complementary to an outer surface geometry of the plunger (200), thereby radially securing the plunger (200) in the valve bore (80).

2. The valve assembly (1000) according to claim 1, wherein the valve bore (80) comprises a first recess (81) merging with the first merge (82).

3. The valve assembly (1000) according to claim 1, wherein the valve bore comprises
a first recess (81) merging with the first merge (82), and
a second recess (83) merging with the second merge (84).

4. The valve assembly (1000) according to claim 3, wherein a recess portion (814) of a specific recess (81, 83) in connection with a corresponding specific merge (82,84) has a cylindrical geometry having
an axial extension parallel to the axial extension (A1) of the valve bore (80), and
a radial center shifted towards the specific merge (82,84).

5. The valve assembly (1000) according to any one of claims 1-4, wherein an axially extending length of the plunger (200) is similar to an axially extending length of the interior valve bore wall section (10a,10b) on the radially opposing side of the respective merge of the first (82) and the second merge (84).

6. The valve assembly (1000) according to any one of claims 1-5, wherein a top axial end portion (210) of the plunger (200) comprises a first O ring (212), and a bottom axial end portion (220) of the plunger (200) comprises a second O ring (222), wherein the first O ring (212) is arranged to be in contact with a top valve bore surface (88) of the valve bore (80) when the plunger (200) is situated in the first plunger position, the top valve bore surface (88) having a surface normal being parallel to the axial extension (A1) of the valve bore (80), and wherein the second O ring (222) is arranged to be in contact with a bottom valve bore surface (89) of the valve bore (80) when the plunger (200) is situated in the second plunger position, the bottom valve bore surface (89) having a surface normal being parallel to the axial extension (A1) of the valve bore (80).

7. The valve assembly (1000) according to any one of claims 1-6, wherein the valve housing (100) comprises an intermediate O ring (110) situated between the top valve bore surface (88) and the bottom valve bore surface (89), wherein a geometrical plane spanned by the intermediate O ring (110) separates the first (82) and the second (84) merge.

8. The valve assembly (1000) according to any one of claims 1-7, wherein the plunger (200) comprises a cylindrical mantle (250) having axially opposing openings allowing a liquid to exclusively flow through the plunger (200) via the axially opposing openings.

9. The valve assembly (1000) according to any one of claims 1-8, further comprising
- an electronically controlled linear actuator (300),
- an translator (310) having an elongated geometry, wherein the translator (310) is situated parallel to the axial extension (A1) of the valve bore (80), and wherein the translator (310) is operably connected to the electronically controlled linear actuator (300) and the plunger (200), such that a movement of the translator (310) along the axial extension thereby generates a movement of the plunger (200) along the axial extension (A1).

10. The valve assembly (1000) according to any one of claims 1-9, wherein the first liquid opening (20) constitute a first liquid outlet, the second liquid opening (40) constitute a second liquid outlet, and the third liquid opening (60) constitute a liquid inlet, the valve assembly (1000) thereby functioning as a diverting valve for diverting a liquid flowing into an interior of the valve through the liquid inlet whereafter liquid flows out from the valve bore (80) through the first liquid outlet and/or the second liquid outlet.

11. The valve assembly (1000) according to any one of claims 1-9, wherein the first liquid opening (20) constitute a first liquid inlet, the second liquid opening (40) constitute a second liquid inlet, and the third liquid opening (60) constitute a liquid outlet, the valve assembly thereby functioning as a mixing valve for mixing liquid flowing into an interior of the valve through the first (20) and the second (40) liquid inlet whereafter the liquid flows out from the interior of the valve through the liquid outlet (60).

12. The valve assembly (1000) according to any one of claims 1-10, wherein the first liquid opening (20) and the second liquid opening (40) are located on radially opposite sides of the valve housing (100)

13. The valve assembly (1000) according to any one of claims 1-12, wherein the valve housing (100) is manufactured by a durable material being any one of steel, brass, iron, composite, or any compound thereof.

14. Use of a valve assembly (1000) according to any one of claims 1-13 for diverting or mixing a liquid flowing in a heating or cooling system.
